# EUROPEAN PATENT SPECIFICATION

(11) **EP 3 269 593 B1**
(45) Date of publication and mention of the grant of the patent: **02.09.2020**
(21) Application number: 16460068.6
(22) Date of filing: 18.09.2016
(51) Int. Cl.: B60P 7/08

(54) **SEMITRAILER SIDE EDGE**
SATTELAUFLIEGERSEITENKANTE
BORD LATÉRAL DE SEMI-REMORQUE

(30) Priority: 12.07.2016 PL 41739916
(43) Date of publication of application: 17.01.2018
(73) Proprietor: "WIELTON" Spolka Akcyjna, 98-300 Wielun (PL)
(72) Inventor: Czarnuch, Arkadiusz, 98-320 Osjaków (PL); Kaczor, Maciej, 98-346 Skomlin (PL)
(74) Representative: AOMB Polska Sp. z.o.o.

(56) References cited:
- DE-A1- 10 155 728
- FR-A1- 2 782 040
- US-A- 4 226 465

## Description

The subject of the invention is the semitrailer side edge allowing for cargo locking, which is used in various types of semitrailers, with rigid sides and also in the curtain side semitrailers. Document DE 101 55 728 A1 discloses the preamble of independent claim 1.

There are a number of constructions for semitrailer side edges and a number of constructions for the mounting elements which are installed in the semitrailer edges and are intended for protecting the cargoes placed and transported on a semitrailer. The solution titled "Profiled frame section for goods vehicle superstructures, for semitrailers and similar" is known from the description of German invention DE 198 06 448. This solution presents a frame section for the superstructures of commercial vehicles, particularly for semitrailers. It is fitted with the fixing rings, installed in the profiled section of the frame section's loading floor. The fixing rings consist of at least two parallel guides, the crosspiece which locks fixing and at least one bottom lock (shallow bottom lock). The fixing rings can be lowered to the level of loading floor or below it. This solution is characterized of the fact that there are knocked out/pressed/extruded recesses (concavities) in the profiled section of the loading floor, arranged on the entire length of the frame section and there is at least one hole in the recess bottom, through which the fixing ring guides are led and the knocked out/pressed/extruded volume of the recess (concavity) extruded below the loading floor level allows for compatible placing in it the crosspiece (belonging to the fixing ring) which locks the fixing and is lowered to the recess base.

The "Device for attaching a securing element to secure an object on a loading area of a transport vehicle" is known from the European patent EP1972494. This device is fitted with an arc-shaped element, made of metal (e.g. steel) and is inserted through the through holes, which are adapted to the dimensions of the arc-shaped element. The arc-shaped elements are safely secured on the side of a loading area of a transport vehicle, e.g. in a trailer, at a distance from the part of loading area intended for the object which is to be transported. The securing element - e.g. in the form of tape - is placed and/or secured to the sides of a loading area.

The device named the "Device for securing loads at commercial vehicle and container" is known from German patent description DE102011101907. This invention regards a device for securing loads, with rolled or edged profiled element, which has a recess (recess of the wall section in the floor), in which two holes are made. It is also fitted with a ring with two parallel elements, running through the holes to the top (to the upper part of the element) and a counter-element (in the lower part of the element), which are connected to each other respectively above and below the recess (recess of the wall section). The crosspiece connecting the parallel elements above the recess (wall section) encloses the counter-element which connects the parallel elements to each other below the wall section. The ring is regulated/adjustable between the rest position, in which the crosspiece is located in the recess, and the working position, in such a manner that the crosspiece maintains a distance to the recess (wall section). This invention is characterized of the fact that the crosspiece protrudes in such a manner that, at least in the area of the holes for parallel elements, these holes are not entirely covered in the ring rest position.

The purpose of developed invention is to create such an edge side for fixing the cargoes placed and transported on a semitrailer, which will allow easy and comfortable mounting and securing the transported cargo, irrespective of the semitrailer's type, the construction of which will require using the smallest number of elements necessary for its proper functioning, with maintaining or even improving the effectiveness of its functioning and the safety of transported cargo in relation to the solutions known so far.

The essence of a side edge of a semitrailer with a frame section, as a longitudinal part of a body construction in which holes allowing to install elements for cargo locking are made, consists in the fact that the frame section has two longitudinal furrows, wherein an elevation between these furrows constitutes a pullback strip in which through holes are made. In the cross-section the pull-back strip resembles the misshapen "Ω" letter whose arms run upwards from the base and merge at the top, wherein the arms of the pull-back strip are parallel and adjoin each other.

Preferably, the frame section is made in the semitrailer's floor, frame, or integral body, preferably - partially or entirely - below a loading area of a vehicle.

Preferably, the arms of the pull-back strip merge at the top forming an arc. The arc has usually a shape close to a circle.

Preferably, the through holes are arranged at equal intervals.

Preferably, the through holes resemble, in their shape, the rectangles arranged horizontally, the upper side of which is preferably rounded.

Preferably, the edges and corners of the through holes are rounded and bevelled.

Preferably, a longitudinally shaped strip is located even closer to the centre of a semitrailer, next to that of the two longitudinal furrows which is more distant from the vehicle edge and closer to a loading area of a vehicle, and the upper surface of this strip is preferably flat or horizontal, and is preferably elevated to such an extent that it faces a plywood placed next to it, on a supporting plane of the semitrailer floor.

Preferably, the through holes, in which fixing elements are placed, are located below the surface of the semitrailer floor and sufficiently low that the fastened fixing element does not enter a loading area of a semitrailer.

Preferably, a hook serves as the fixing element placed in the through hole.

Preferably, the semitrailer side edge has an extreme and longitudinal recess.

Preferably, on the edge the longitudinal recess turns into a hitch strip, which resembles preferably the reversed "U" letter with a flat bottom.

Preferably, the longitudinal seal is seated in the longitudinal recess and the seal is locked, usually by its pressing, in the longitudinal recess of the frame section, wherein the recess in the frame section can be made below the floor surface.

Preferably, the canvas cover of a curtain side semitrailer is hooked - for instance with clamps - on the edge of the hitch strip.

Preferably, the through holes are reinforced with optimally two sheets, placed parallel.

The solution according to the invention allows easy and safe fixing and securing the cargos placed both on the semitrailer platform with rigid sides and on the semitrailer with canvas cover. A special advantage of the developed construction is the easiness of fixing and undoing the single, individual fixing elements, wherein the bigger is the number of fixing elements installed in the semitrailer's frame section, the safer and more secure they protect the cargo fixed with them. A person fixing the cargo can freely select the fixing option and use for fixing only a part of the through holes made in the semitrailer's frame section, or all of them. Fixing the cargo using simultaneously a number of the through holes grouped close to each other in the side edge of a semitrailer ensures safer stabilization of the cargo, forming the "safety lock" system.

The fixing element allowing to lock the cargo is usually a simple hook, or its equivalent, for instance a fixing eye or a shape. These elements require only hitching and usually they do not require screwing additional parts in order to mount them in the frame section, i.e. in the side edge of a semitrailer. They do not require to be necessarily fitted with additional elements and they are mounted usually without using additional tools. Multiple longitudinal bending of the frame section stiffens and reinforces its construction. Thanks to that the frame section does not deform in place where it is subjected to point stresses caused by pulling ropes, also at the moments when the cargo is tugged during its transport on a bumpy surface.

The subject of the invention was presented in more detail in the embodiment shown in figures, where Fig. 1 - presents a perspective view of a cut out fragment of the frame section, i.e. the fragment of semitrailer's edge with a through hole prepared for fixing, for instance, a hook with a rope or with the tape of cargo locking belts, in it, Fig. 2 - presents a perspective view of a cut out fragment of frame section's variant with an additional, extreme longitudinal recess for the seal and with the hitch strip, and Fig. 3 - presents the cross-section of the frame section with the fastened hook and a rope which have been fixed right next to schematically shown rigid side of a semitrailer.

The side edge of a semitrailer, shown in the figures, consists of the frame section (1), i.e. the longitudinal part of the body construction, made in the semitrailer's floor, frame or integral body, preferably - partially or entirely -below a loading area of a vehicle. Similar frame sections (1) are situated symmetrically on both sides of a semitrailer and they form its side edges. Each frame section (1) has two longitudinal furrows (2). Both neighbouring longitudinal furrows (2) are shaped in such a manner that the elevation between them resembles, in its cross-section, the misshapen "Ω" letter, wherein the running upwards and vertical (as a rule) arms of this letter form its central part. These arms are most frequently parallel and they usually adjoin each other. They merge at the top, forming an arc close to a circle. This element forms the pull-off strip (3), in which the through holes (4) are made. The through holes (4) are prepared to place in them the elements which fix the belts, tapes, chains or ropes with which the cargo placed on a semitrailer is secured.

The developed construction of the longitudinal furrows (2) and the pull-off strip (3) stiffens the frame section (1) and protects it from deformation, in spite of the fact that it is subjected to strong stresses arising after seating the fixing elements in its through holes (4). The through holes (4) are usually arranged at equal intervals, and they resemble the horizontally arranged rectangles with rounded upper side. The edges and corners of the through holes (4) are rounded and bevelled.

One of the longitudinal furrows (2) - the one which is more distant from the vehicle edge and closer to a loading area of a vehicle - is made longitudinally, right next to the strip (5) which is also longitudinally shaped and located even closer to the semitrailer's centre, and the upper surface of this strip, flat and horizontal as a rule, is elevated to such an extent that it faces a plywood placed next to it, on the supporting plane (6) of the semitrailer floor.

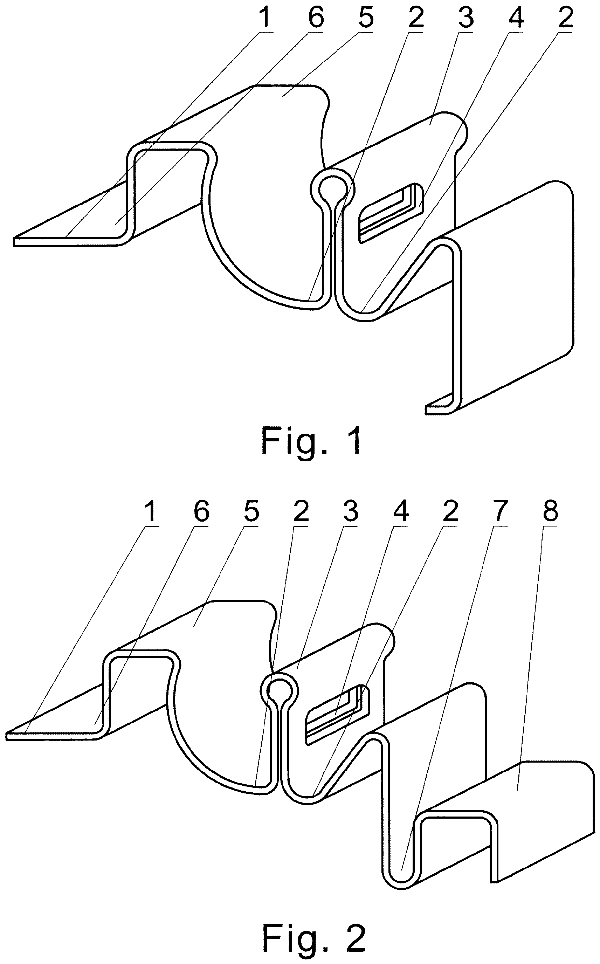

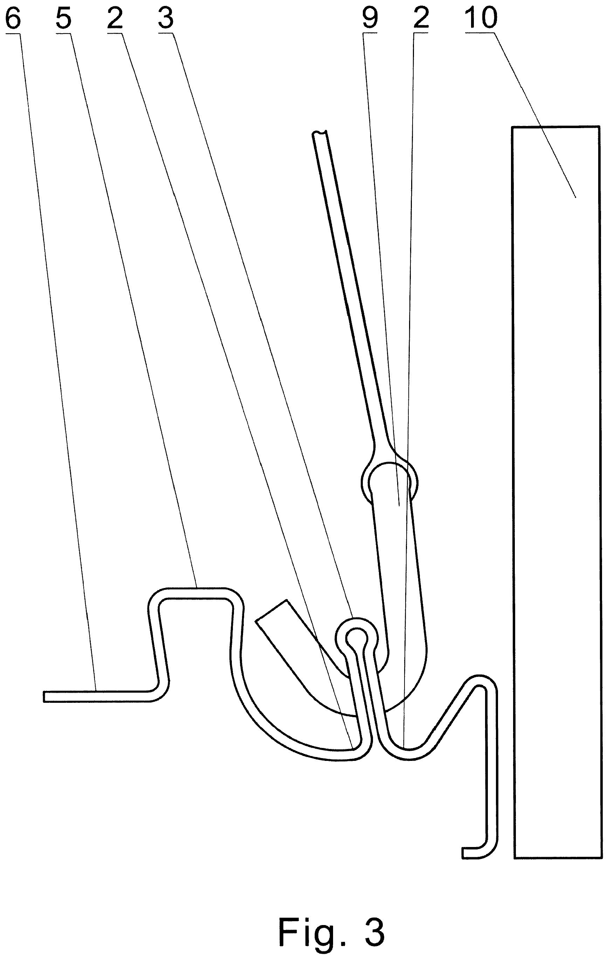

The described frame section (1) can be even more waved. Enriching its construction with additional, extreme longitudinal recesses (7) (Fig. 2), turning into the hitch strip (8) on the edge which resembles the reversed "U" letter with a flat bottom, creates new possibilities of application and using for the developed side edge of a semitrailer. The construction described above is adapted mainly to the application in semitrailers with rigid sides (Fig. 3), while the construction presented below allows using the developed side edge of a semitrailer in so-called curtain side semitrailers covered with canvas.

Thus, respectively the edge of the canvas cover of a side curtain semitrailer can be hooked, for instance with clamps, on the edge of the hitch strip (8). Then, it is possible to seat the additional, longitudinal seals protecting the semitrailer's curtain in the recesses (7) respectively on both sides of a semitrailer.

The fixing element placed in the through hole (4) is usually the hook (9). In the developed solution the through holes (4), in which the hooks (9) are placed, are located below the surface of the semitrailer's floor, and thus sufficiently low that the fastened hook (9) never enters a loading area of a semitrailer.

Simultaneously, the described construction allows a collision-free fastening of the hooks (9) and fixing the cargo also in case when the rigid edge (10) or the canvas curtain is closed.

The through holes (4) are additionally reinforced with two sheets, arranged parallel and improving their strength parameters.

### List of elements:

- 1.: frame section (of a semitrailer),
- 2.: longitudinal furrow,
- 3.: pull-off strip,
- 4.: through hole,
- 5.: strip,
- 6.: supporting plane (of the floor),
- 7.: longitudinal recess,
- 8.: hitch strip,
- 9.: hook,
- 10.: rigid side (side wall).

## Claims

1. A side edge of a semitrailer with a frame section as a longitudinal part of a body construction in which holes allowing to install elements for cargo locking are made, wherein said frame section (1) has two longitudinal furrows (2), **characterized in that** an elevation between these furrows constitutes a pull-back strip (3) in which through holes (4) are made, wherein in cross-section, the pull-back strip (3) resembles a misshapen "Ω" letter whose arms run upwards from the base and merge at the top, wherein the arms of the pullback strip (3) are parallel and adjoin each other.

2. The side edge of a semitrailer according to the claim 1, **wherein** the frame section (1) of a semitrailer is made in the semitrailer's floor, frame, or integral body, preferably - partially or entirely - below a loading area of a vehicle.

3. The side edge of a semitrailer according to the claim 1 or 2, **wherein** the arms of the pull-back strip (3) merge at the top forming an arc which is preferably close to a circle.

4. The side edge of a semitrailer according to one of the claims from 1 to 3, **wherein** the through holes (4) are arranged at equal intervals.

5. The side edge of a semitrailer according to one of the claims from 1 to 4, **wherein** the through holes (4) resemble, in their shape, the rectangles arranged horizontally, the upper side of which is preferably rounded.

6. The side edge of a semitrailer according to one of the claims from 1 to 5, **wherein** the edges and corners of the through holes (4) are rounded and bevelled.

7. The side edge of a semitrailer according to one of the claims from 1 to 6, **wherein** a longitudinally shaped strip (5) is located even closer to the centre of a semitrailer, next to that of the two longitudinal furrows (2) which is more distant from the vehicle edge and closer to a loading area of a vehicle, and the upper surface of the strip (5) is preferably flat or horizontal, and is preferably elevated to such an extent that it faces a plywood placed next to it, on a supporting plane (6) of the semitrailer floor.

8. The side edge of a semitrailer according to one of the claims from 1 to 7, **wherein** the through holes (4), in which fixing elements are placed, are located below the surface of the semitrailer's floor and sufficiently low that the fastened fixing element does not enter a loading area of a semitrailer.

9. The side edge of a semitrailer according to one of the claims from 1 to 8, **wherein** a hook (9) serves as the fixing element placed in the through hole (4).

10. The side edge of a semitrailer according to one of the claims from 1 to 9, **wherein** it has an extreme and longitudinal recess (7).

11. The side edge of a semitrailer according to the claim 10, **wherein** on the edge the longitudinal recess (7) turns into a hitch strip (8), the hitch strip (8) resembles preferably the reversed "U" letter with a flat bottom.

12. The side edge of a semitrailer according to the claim 10 or 11, **wherein** a longitudinal seal is seated in the longitudinal recess (7) and the seal is locked, usually by its pressing, in the longitudinal recess of the frame section (1), wherein the longitudinal recess in the frame section is made, preferably below the floor surface.

13. The side edge of a semitrailer according to one of the claims from 10 to 12, **wherein** a canvas cover of a curtain side semitrailer is hooked - for instance with clamps - on the edge of the hitch strip (8).

14. The side edge of a semitrailer according to one of the claims from 10 to 13, **wherein** the through holes (4) are reinforced with two sheets placed parallel.

## Patentansprüche

1. Eine Seitenkante eines Sattelaufliegers mit einem Rahmenabschnitt als Längsteil einer Aufbautenkonstruktion, in der Löcher zum Einbau von Elementen zur Ladungsverriegelung angebracht sind, wobei das Rahmenprofil (1) zwei Längsfurchen (2) aufweist,
**dadurch gekennzeichnet, dass** eine Erhebung zwischen diesen Furchen einen Rückziehstreifen (3) bildet, in den Durchgangslöcher (4) eingebracht sind, wobei der Rückziehstreifen (3) im Querschnitt dem verformten "Ω"-Buchstaben ähnelt, dessen Arme von der Basis nach oben verlaufen und oben ineinander übergehen, wobei die Arme des Rückziehstreifens (3) parallel sind und aneinander angrenzen.

2. Die Seitenkante eines Sattelaufliegers nach Anspruch 1, **wobei** der Rahmenabschnitt (1) eines Sattelaufliegersim Boden, Rahmen oder integralen Aufbau des Sattelaufliegers, vorzugsweise - teilweise oder vollständig - unterhalb einer Ladefläche eines Fahrzeugs, hergestellt ist.

3. Die Seitenkante eines Sattelaufliegers nach Anspruch 1 oder 2, **wobei** die Arme des Rückziehstreifen (3) oben ineinander übergehen und einen Bogen bilden, der vorzugsweise nahe an einem Kreis liegt.

4. Die Seitenkante eines Sattelaufliegers nach Anspruch 1 oder 3, **wobei** die Durchgangslöcher (4) in gleichen Abständen angeordnet sind.

5. Die Seitenkante eines Sattelaufliegers nach Anspruch 1 oder 4, **wobei** die Durchgangslöcher (4) in ihrer Form den horizontal angeordneten Rechtecken ähneln, deren Oberseite vorzugsweise abgerundet ist.

6. Die Seitenkante eines Sattelaufliegers nach Anspruch 1 oder 5, **wobei** die Kanten und Ecken der Durchgangslöcher (4) abgerundet und abgeschrägt sind.

7. Die Seitenkante eines Sattelaufliegers nach Anspruch 1 oder 6, **wobei** ein in Längsrichtung geformter Streifen (5) noch näher an der Mitte eines Sattelaufliegers angeordnet ist, neben derjenigen der beiden Längsfurchen (2), die weiter von der Fahrzeugkante entfernt ist und näher an einer Ladefläche eines Fahrzeugs liegt, und die Oberseite des Streifens (5) vorzugsweise flach oder horizontal ist, und vorzugsweise so weit erhöht ist, dass sie einem daneben auf einer Auflageebene (6) des Sattelaufliegerbodens angeordneten Sperrholz gegenüberliegt.

8. Die Seitenkante eines Sattelaufliegers nach Anspruch 1 bis 7, **wobei** die Durchgangslöcher (4), in denen Befestigungselemente angeordnet sind, sich unterhalb der Oberfläche des Sattelaufliegerbodens befinden und so niedrig sind, dass das befestigte Befestigungselement nicht in eine Ladefläche eines Sattelaufliegers eindringt.

9. Die Seitenkante eines Sattelaufliegers nach Anspruch 1 bis 8, **wobei** ein Haken (9) als das in dem Durchgangsloch (4) angeordnete Befestigungselement dient.

10. Die Seitenkante eines Sattelaufliegers nach Anspruch 1 bis 9, **wobei** es eine äußerste und eine Längsaussparung aufweist (7).

11. Die Seitenkante eines Sattelaufliegers nach Anspruch 10, **wobei** an der Kante die Längsaussparung (7) in eine Kupplungsleiste (8) übergeht, die Kupplungsleiste (8) ähnelt vorzugsweise dem umgekehrten "U"-Buchstaben mit einem flachen Boden.

12. Die Seitenkante eines Sattelaufliegers nach Anspruch 10 bzw. 11, **wobei** eine Längsdichtung in der Längsausnehmung (7) sitzt und die Dichtung in der Längsausnehmung des Rahmenprofils (1) verriegelt ist, üblicherweise durch deren Verpressen, wobei die Längsausnehmung im Rahmenprofil vorzugsweise unterhalb der Bodenoberfläche ausgebildet ist.

13. Die Seitenkante eines Sattelaufliegers nach Anspruch 10 bis 12, **wobei** eine Planenabdeckung eines Planenseitenaufliegers - zum Beispiel mit Klammern - an der Kante der Anhängeleiste (8) eingehakt ist.

14. Die Seitenkante eines Sattelaufliegers nach Anspruch 10 bis 13, **wobei** die Durchgangslöcher (4) mit zwei parallel angeordneten Blechen verstärkt sind.

## Revendications

1. Un bord latéral d'une semi-remorque avec une section de châssis en tant que partie longitudinale d'une construction de carrosserie dans laquelle sont fabriqués les trous permettant d'installer des éléments pour le verrouillage de la cargaison, où ladite section de châssis (1) a deux sillons longitudinaux (2),
**caractérisé en ce qu'**une élévation entre ces sillons constitue une bande de retrait (3) dans laquelle sont fabriquésles trous traversants (4), dans lequel, en coupe transversale, la bande de retrait (3) ressemble à une lettre « Ω » difforme dont les bras courent vers le haut à partir de la base et fusionnent en haut, dans leguel les bras de la bande de retrait (3) sont parallèles et adjacents l'un à l'autre.

2. Le bord latéral d'une semi-remorque selon la revendication 1, **dans lequel** la section de châssis (1) d'une semi-remorque est réalisée dans le plancher, le châssis ou le corps intégral de la semi-remorque, de préférence - partiellement ou entièrement - sous une zone de chargement d'un véhicule.

3. Le bord latéral d'une semi-remorque selon la revendication 1 ou 2, **dans lequel** les bras de la bande de retrait (3) fusionnent en haut en formant un arc qui est de préférence proche d'un cercle.

4. Le bord latéral d'une semi-remorque selon l'une des revendications 1 à 3, **dans lequel** les trous traversants (4) sont disposés à intervalles égaux.

5. Le bord latéral d'une semi-remorque selon l'une des revendications 1 à 4, **dans lequel** les trous traversants (4) ressemblent, dans leur forme, aux rectangles disposés horizontalement, dont le côté supérieur est de préférence arrondi.

6. Le bord latéral d'une semi-remorque selon l'une des revendications 1 à 5, **dans lequel** les bords et les coins des trous traversants (4) sont arrondis et biseautés.

7. Le bord latéral d'une semi-remorque selon l'une des revendications 1 à 6, **dans lequel** une bande de forme longitudinale (5) est située encore plus près du centre d'une semi-remorque, à côté de celui des deux sillons longitudinaux (2) qui est plus éloigné du bord du véhicule et plus proche d'une zone de chargement d'un véhicule, et la surface supérieure de la bande (5) est de préférence plate ou horizontale, et est de préférence élevée à un point tel qu'elle fait face à un contreplaqué placé à côté de lui, sur un plan de support (6) du plancher de la semi-remorque.

8. Le bord latéral d'une semi-remorque selon l'une des revendications 1 à 7, **dans lequel** les trous traversants (4), dans lesquels des éléments de fixation sont placés, sont situés sous la surface du plancher de la semi-remorque et suffisamment bas pour que l'élément de fixation fixé n'entre pas dans la zone de chargement d'une semi-remorque.

9. Le bord latéral d'une semi-remorque selon l'une des revendications 1 à 8, **dans lequel** un crochet (9) sert d'élément de fixation placé dans le trou traversant (4).

10. Le bord latéral d'une semi-remorque selon l'une des revendications 1 à 9, **dans lequel** il présente un évidement extrême et longitudinal (7).

11. Le bord latéral d'une semi-remorque selon la revendication 10, **dans lequel,** sur le bord, l'évidement longitudinal (7) se transforme en bande d'attelage (8), la bande d'attelage (8) ressemble de préférence à la lettre « U » inversée à fond plat.

12. Le bord latéral d'une semi-remorque selon la revendication 10 ou 11, **dans lequel**une scellé longitudinal est logée dans l'évidement longitudinal (7) et le joint est verrouillé, généralement par sa pression, dans l'évidement longitudinal de la section de châssis (1), où l'évidement longitudinal dans la section de châssis est réalisé, de préférence sous la surface du plancher.

13. Le bord latéral d'une semi-remorque selon l'une des revendications 10 à 12, **dans lequel** une toile de bâche d'un côté rideau de semi-remorque est accroché - par exemple avec des pinces - sur le bord de la bande d'attelage (8).

14. Le bord latéral d'une semi-remorque selon l'une des revendications 10 à 13, **dans lequel** les trous traversants (4) sont renforcés par deux feuilles placées parallèlement.
